# EUROPEAN PATENT APPLICATION

(11) **EP 4 231 213 A1**
(43) Date of publication of application: **23.08.2023**
(21) Application number: 21819244.1
(22) Date of filing: 11.10.2021
(51) Int. Cl.: G06Q 10/06, G06Q 10/08, G07F 13/00

(54) **SYSTEM AND METHOD FOR TRACKING COFFEE CONTAINERS**

(30) Priority: 14.10.2020 PT 2020116825
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2021/050034
(87) International publication number: WO 2022/081031

(57) **Abstract**

The present invention relates to processes and systems for distributing coffee to a plurality of consumption locations (A) where beverage preparation apparatus, including espresso coffee and the like, are operated. In particular, the present invention discloses the use of reusable distribution containers (3) and adapted for collecting and discharging coffee beans or substance derived therefrom, between supply locations (B) and consumption locations (A) where beverage preparation apparatuses are operated.

The distribution containers (3; 3A, 3B) can be of one or two types, and can be transported by a transport vehicle (1) that presents displacement means (2) and can discharge coffee beans in a manner sealed to the ambient atmosphere.

## Description

### Field of Invention

The present invention relates to the field of processes and systems for the distribution of coffee beans or substances derived therefrom, to consumption locations where beverage preparation apparatus, such as espresso coffee and others, are operated on the basis of coffee beans, coffee, or substances derived from it.

### Background of the Invention

The distribution of coffee beans to consumption locations where beverage preparation apparatuses are operated on the basis of roasted and ground coffee beans is known. Such apparatuses are operated on the basis of supply containers that supply the said roasted and ground coffee bean, either manually, for example through discharge to filter-holder apparatuses, or automatically, to beverage extraction apparatuses. Such supply containers are often provided associated with at least one roasting means and a grinding means.

Examples of coffee beans distribution containers up to such supply containers are known.

Document US 7,074,443 B2 discloses a package for containing roasted and ground coffee beans under atmospheric pressure.

Documents WO 2009/224653 A1 and WO 2018/106631 A1 disclose packaging systems for providing roast and ground coffee beans. In the first case, it is a package with a circular cross section provided in a rigid material, while in the second case, it is a package with a rectangular cross section and provided in a flexible material.

In any case, it is also known that the supply of coffee bean, being a granular type medium, is usually distributed to consumption locations in bag-type packages, which in the case of roasted coffee beans are usually sealed in inert atmospheres of in order to minimize the degradation of the properties of the coffee bean. Furthermore, for reasons of ease of handling the coffee beans bags are usually provided relatively small, for example 1 kg in weight, and are grouped in cartons which are in turn arranged on pallets.

Furthermore, it is essential to ensure a barrier to the transmission of ultraviolet radiation and the transfer of water vapor and oxygen, whereby usually said coffee beans bags are provided in relatively expensive materials, for example composite materials, and difficult to dispose of or recycling. This requirement requires the use of materials that are relatively expensive and whose disposal entails significant environmental costs.

In addition to transport or distribution containers of coffee beans, and as mentioned above, containers for supplying coffee beans to roasting and/or grinding means associated with the beverage preparation apparatus at consumption locations are known. This type of supply containers is usually configured so that can be releasably retained in said roasting and/or grinding means. In particular, these supply containers have relatively small dimensions and the supply of coffee beans takes place in a gravitational way. Examples of supply containers adapted so that can collect coffee beans and operate with roasting means and/or grinding means at consumption locations are disclosed by EP 2344013 B1, EP 2653082 B1.

The state of the technique includes various solutions relating to systems and processes for distributing coffee beans to a plurality of consumption locations. The still common solution is to use transport vehicles that transport a plurality of containers of coffee beans.

### Brief Description of the Invention

The objective of the present invention is to provide processes and systems for coffee distribution from at least one supply location and to a plurality of consumption locations geographically distant from each other, said processes and systems being more efficient in terms of use of energy and materials, with a substantial reduction in the consumption of packaging materials and transport energy, in particular per unit weight of coffee beans, associated with distribution. This reduction in packaging material is relevant because the transport of coffee beans, or substance derived therefrom, requires materials with barrier properties to water vapour or oxygen transfer and to the transmission of ultraviolet rays, and these are materials generally difficult to recycle or eliminate by composting, and are relatively expensive materials.

A related objective of the present invention is to provide a process for distributing coffee to a plurality of geographically distant consumption locations with better conservation of the quality of the coffee beans in storage, and better operating efficiency at the consumption locations.

This objective is accomplished according to the present invention by means of a distribution process according to claim 1.

In particular, the above objective is solved by means of a process comprising a plurality of distribution cycles between an ex situ supply location and in situ consumption locations geographically distanced apart, using reusable distribution containers adapted so that at least one type can be operated in discharge indoors of the consumption location and remotely in relation to beverage preparation apparatus.

Each process cycle may include transporting a distribution container, via a transport vehicle with displacement means, to at least one, preferentially of a plurality of successive consumption locations, discharging at least part of the load from the distribution container at each destination consumption location, and transporting the distribution container back to a supply location for refilling the same.

The process may include refilling the distribution container ex situ, discharging at least part of the load from the distribution container in situ, and supplying the coffee beans in situ to at least one of: roasting means, coffee beans grinding means, beverage preparation apparatus and power supply container thereof, whereby in all said steps, respective storage periods and transitions between containers, the coffee beans are preferentially kept in sealed conditions to the ambient atmosphere.

The process may include transporting distribution containers indoors of the consumption location via displacement means individually associated with each distribution container.

The process may include assigning a unique identification, for example a serial number, to each distribution container, preferentially associated with information means arranged on the container envelope and configured so that can be automatically apprehended.

The coffee beans to be transported can be green coffee beans or roasted coffee beans. In particular, the coffee beans collected in a continuous volume of the transport container can be green coffee beans or roasted coffee beans, under conditions of inert gas atmosphere and/or overpressure, adapted so that can preserve the organoleptic properties thereof.

The consumption locations are locations where at least one, possibly a plurality of beverage preparation apparatuses are located, operable with roast and ground coffee bean, or substance derived therefrom, such as for example coffee beverage concentrate.

Examples of consumption locations include locations of public consumption, such as cafes and restaurants, which include one or more beverage preparation systems, and places of private consumption.

In these consumption locations there is at least one apparatus for preparing beverages based on coffee beans or a substance derived therefrom, such as espresso coffee and the like.

The beverage preparation apparatuses may include a beverage preparation machine adapted so that can perform extraction cycles of an individual portion of the roast and ground coffee beans.

The beverage preparation apparatuses may further comprise at least one of: coffee beans roasting means and coffee beans grinding means, provided in operative flow-feeding connection of coffee beans or ground coffee beans to beverage preparation apparatuses that discharge beverage into a drinking recipient. The beverage apparatuses may further comprise means for supplying pressurized and heated fluid, in flow connection with said beverage preparation apparatuses.

The coffee beans roasting means can be associated with a container that can be provided in flow connection upstream of the coffee beans grinding means.

The coffee beans grinding means can be remotely arranged with respect to the beverage preparation apparatuses, so that the supply of ground coffee beans to the beverage preparation apparatuses is done manually. Examples of this type of beverage preparation apparatus, including for example espresso-type coffee preparation machines and similar beverages, operated on the basis of coffee beans grinders which can be operated with filter holders also operable as beverage preparation apparatuses, are known in the state of the art, so a more detailed description of them is waived.

Alternatively, the coffee beans grinding means can be associated in direct flow connection with the beverage preparation apparatuses so that the supply of ground coffee beans to the latter is by conduct-type connection, or similar.

A related objective is to provide a distribution system that reduces the amount of energy and materials associated with the distribution of coffee beans or substance derived therefrom to a plurality of geographically distant consumption locations.

This objective is solved according to the present invention by means of a distribution system according to claim 12, whereby the secondary claims disclose preferred embodiments.

The system according to the present invention can be adapted so that can carry out a process according to any of claims 1 to 11.

In particular, the present invention discloses a system that can include a transport vehicle with means of propulsion and locomotion, adapted so that can transport at least one reusable distribution container that can store coffee beans or derived substance, provide its transport to, as well as discharging at a plurality of consumption locations geographically distant from each other, and that can be returned multiple times to a factory side where it can be recharged.

A related objective of the present invention is to provide reusable distribution containers adapted for the collection and storage of coffee beans or substance derived therefrom, and which reduce the amount of packaging material used, simplifying the handling of coffee beans discharging operations, as well as improve the operability of such containers in consumption locations.

In particular, this objective is accomplished by means of a system that includes a single type of reusable distribution container, or at least two types of reusable distribution containers of different dimensions, adapted so that can be operated for transfer of coffee beans or substance derived therefrom, between an ex *situ* supply location and *in situ* consumption locations, so that can be operated in a discharge position into beverage preparation means at the consumption location, said discharge position being remote from such beverage preparation means.

The system may include a first type of distribution containers: transport containers configured with bigger cargo volume and configured so that can only be operated outdoors.

The system can include only a second type of distribution container: supply containers configured so that can be operated indoors.

The distribution containers are configured so that can be reused for multiple loads of coffee beans, or substance derived therefrom.

The distribution containers may present a collection volume greater than 0.005 m³, preferentially greater than 0.01 m³, and preferentially smaller than 30 m³, preferentially smaller than 20 m3.

The distribution containers can be adapted so that can discharge coffee beans *in situ* from a position in the transport vehicle, for example to supply containers at the consumption location, or they can be moved to a position outside the transport vehicle so that can discharge coffee beans at the consumption location, optionally only at a certain consumption location for each load.

The distribution containers can discharge coffee beans *in situ* in sealed manner relative to the ambient atmosphere into a supply container with a smaller collection volume, whereby both of said types of containers are configured as reusable.

The *in situ* discharge of coffee beans from the distribution containers can be carried out by means of a conduct connection sealed relative to the ambient atmosphere, so that the coffee beans are not exposed to the outside environment on the way to the beverage preparation device.

According to the present invention, it is particularly advantageous when the system includes only a distribution container adapted so that can be operated *in situ* in a discharge position indoors of the consumption location into at least one of: roasting, grinding means, beverage preparation device, or supply containers directly coupled in feeding connection to at least one of these, remotely relative to these.

The supply containers are containers of smaller dimensions than the transport containers, and are adapted so that can be operatively connected by means of flow connections, preferentially of the flexible drain duct type.

The supply containers can have a collection volume of between 0.005 and 0.1 m³, preferentially of between 0.01 and 0.05 m³.

The supply containers may present at least one characteristic dimension greater than 20 cm and smaller than 1.5 m, preferentially greater than 30 cm and smaller than 90 cm.

The supply containers can be refilled at the ex *situ* supply location and operated in discharge at an *in situ* consumption location, in particular by connection with discharge means adapted for supplying the beverage preparation apparatuses.

In particular, the supply containers may be operated in cycles that include loading at the supply location and transport to a consumption location, where they may be operated to discharge the entire respective cargo at said consumption location *in situ,* and transported back to the ex situ supply site for recharging.

The discharge connection of the supply containers downstream thereof can be carried out in a conduct connection in a sealed manner with respect to the ambient atmosphere.

The transport vehicle may present displacement means that include means for propulsion and locomotion, and discharge means, optionally also loading, that include flow connection and flow impulse means, provided so that can be actuated by electrical power.

The transport vehicle may present electrical energy storage means, preferentially still electrical energy generating means, adapted so that can store and supply energy to operate at least the charging/discharging means, optionally also the displacement means.

The transport vehicle may include control means adapted so that can provide at least one of:
- actuate and/or regulate the discharge from the distribution container, by regulating at least one of: the operation of the discharge means and the opening and closing of the container opening of the distribution container,
- assess at least one of the number, type and specific identification of distribution containers on board the transport vehicle;
- actuate and/or regulate at least one of the discharging and charging of the distribution containers relative to the transport vehicle, preferentially automatically,

The transport vehicle may include data means adapted so that can regulate the discharge of at least one of: a quantity of coffee beans, or substance derived therefrom, and a quantity of distribution containers in a plurality of consumption locations geographically distanced between them, according to data received from remote data means.

The transport vehicle may include data means provided in data connection with remote data means and preferentially further with at least one of: measuring means of the quantity of coffee beans inside the distribution container and/ or means for measuring the quantity discharged therefrom.

The transport vehicle may present data means adapted to operate with a geo-referencing link, for example via satellite.

The transport vehicle can present data means adapted so that the transport vehicle can operate semi-autonomous or autonomously, in at least one of:
- displacement between successive consumption locations and at least one supply location,
- discharging at least one of: distribution container and coffee beans at each consumption location.

### Description of the Drawings

The invention will be explained in greater detail below on the basis of preferred embodiments and the attached drawings.

The drawings show, in simplified schematic representations, embodiments of systems and processes according to the present invention:
- Figure 1:: a first embodiment of a transport vehicle (1) and a distribution container (3);
- Figure 2:: a second embodiment of a transport vehicle (1) and distribution container (3);
- Figure 3:: diagram of a first embodiment of distribution at a consumption location (A);
- Figure 4:: diagram of a second embodiment of distribution at a consumption location(A);
- Figure 5:: diagram of a third embodiment of distribution at a consumption location (A);
- Figure 6:: diagram of a fourth embodiment of distribution at a consumption location (A);
- Figure 7:: an embodiment of a coffee distribution process;
- Figure 8:: an embodiment of a coffee distribution process;
- Figure 9:: an embodiment of a coffee distribution process;
- Figure 10:: an embodiment of a coffee distribution process;
- Figure 11:: a third embodiment of a transport vehicle (1) and a distribution container (3);
- Figure 12:: a fourth embodiment of a transport vehicle (1) and a distribution container (3);
- Figure 13:: schematic diagram of a third embodiment of distribution at a consumption location(A) ;
- Figure 14:: schematic diagram of a fourth embodiment of distribution at a consumption location (A);
- Figure 15:: top view of a form of arrangement of distribution containers (3), in particular supply container (3B), in a transport vehicle (1) ;
- Figure 16:: side elevation view of a form of arrangement of distribution containers (3), in particular supply container (3B), in a transport vehicle (1) ;
- Figure 17:: an embodiment of a transport container (3A) in a system according to the present invention;
- Figure 18:: an embodiment of the general configuration of a transport container (3A) or a supply container (3B) container in a system according to the present invention;
- Figure 19:: a fourth embodiment of a coffee distribution process in accordance with the present invention;
- Figure 20:: a fifth embodiment of a coffee distribution process in accordance with the present invention;
- Figure 21:: diagram of data in systems and processes according to the present invention.

### Description of preferred embodiments of the invention

The present invention shall be described based upon embodiments that include consumption locations (A) geographically distant from each other, and in which beverage preparation apparatus operate with roasted and ground coffee beans, for example for preparing espresso coffee or other coffee-based beverages.

In this case, it is necessary to supply coffee beans for roasting and grinding in situ at the consumption location, or coffee beans previously roasted ex *situ,* and for at least to be ground *in situ* at the consumption location.

Examples of this type of consumption locations (A) include different places of public use, such as cafes, restaurants and the like.

The aforementioned consumption locations (A) are geographically distant from each other.

The scope of the invention can include other substances derived from coffee beans, such as coffee beverage concentrates.

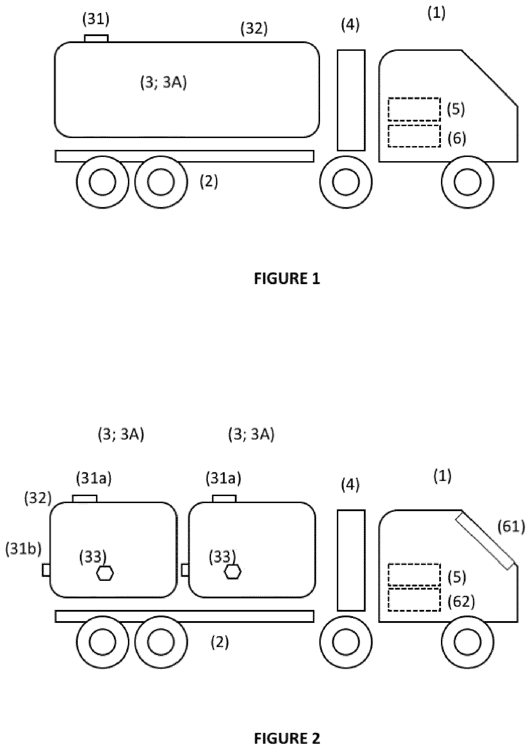

Figure 1 represents embodiments of a transport vehicle (1), in this case a lorry-type vehicle, which includes displacement means (2), that is, means of locomotion and propulsion that can be an engine operatively connected to a train of wheels, and adapted so that can carry a first type of distribution container (3; 3A) for collecting coffee beans and that presents at least one dimension similar to at least one corresponding dimension of the loading part of the transport vehicle (1).

In particular, a first type of distribution container (3; 3A) can present at least one dimension similar to the corresponding dimension of the trailer of a transport vehicle (1), for example the length may be 20 or 40 feet, or other standard length measurement.

The distribution container (3) is advantageously configured as a container for a plurality of distribution paths including successive cycles of operation between a supply location (B), where loading and reloading of the distribution container (3) with coffee beans, and at least one, or a plurality of consumption locations (A) geographically distant from each other, in which coffee beans are discharged.

The distribution container (3) can present an opening (31) in an envelope (32) preferentially provided in a rigid material and which encloses a collection volume and has at least one characteristic dimension, in particular width, similar to a characteristic dimension of the transport vehicle (1). Furthermore, it can also present a second similar dimension, namely the length, as in the case of the embodiment shown in Drawing 1. Said opening (31) can be used for loading and discharging.

Alternatively, as in the case shown in Figure 2, the distribution containers (3) can present a loading opening (31a) and at least one discharge opening (31b) adapted so that can be closed in a sealed manner. In particular, at least one of, preferentially both, said loading and discharge openings (31b) can present a perimeter region that is adapted, for example with a collar-like collar of rigid material, so that can be detachably engaged with a first connection end, for example a conduit of circular section, for the outflow of coffee beans or derived substance.

The distribution container (3) can present an envelope (32) with a general shell-like shape, for example of a cylindrical or parallelepiped type, that encloses a collection volume adapted for collecting and storing coffee beans. Said material envelope can be adapted so that can provide barrier to ultraviolet transmission and water vapour transfer and oxygen transfer to the interior.

The distribution container (3) can have at least one loading opening (31a) adapted so that can be connected, preferentially sealingly, to loading means (not shown), preferentially of the flexible conduit type or the like, namely at a supply location (B), for refilling a load of coffee beans, and further presenting at least one discharge opening (31b) which can be provided in a different relative position in the envelope (32) and adapted so that can also be connected, preferentially sealingly, with discharge means (4), preferentially of the flexible conduit type or the like, for discharging coffee beans.

In the case of the embodiment shown in Figure 2, the loading opening (31a) is provided on an upwards-oriented side and the discharge opening (31b) can be provided in a region close to the base wall, or in the base wall, of the distribution container (3).

The transport vehicle (1) may be associated with discharge means (4) that may include a discharge conduit and flow impulse means adapted so that can provide a discharge impulse, for example compressed air, or vacuum, to actuate the coffee beans discharge flow.

The transport vehicle (1) can further present data means (5) adapted so that can regulate the operation of at least the discharge means (4), in particular on the basis of the acquisition and processing of data associated with the distribution containers (3), optionally also data associated with the displacement means (2), and operating in data connection with remote data means (20), exchanging data with these by means of wireless communications, as will be explained below. It is advantageous when the data means (5) include geo-referencing means, for example of the GPS type, or the like.

The transport vehicle (1) can also present energy generation means (61), for example of the photovoltaic type, and energy storage means (62), for example of the electric battery type, adapted so that can supply electric energy, or another form of final energy, at least to the discharge means (4), optionally also to the displacement means (2).

The data means (5) and power means (6) can be adapted so that can provide propulsion, guidance and data communication autonomy to the transport vehicle (1), so that the distribution process to various consumption locations (A) can be carried out automatically/autonomous from direct human intervention.

In particular, it is advantageous when the transport vehicle (1) comprises propulsion means, including actuated by electric energy or by hydrogen, and further presents temporary energy storage means, including electric energy and/or hydrogen, adapted so that can provide said means of propulsion and, further, discharge means (4) of coffee beans or of distribution container (3) .

According to an advantageous aspect, the distribution container (3) can present information means (33). The information means (33) can include information regarding the contents, origin and/or destination of the container, and counterfeiting prevention measures. In particular, the information means (33) can be provided so that can be read automatically, for example in a form of colour code, bar code, QR code, or other coding type.

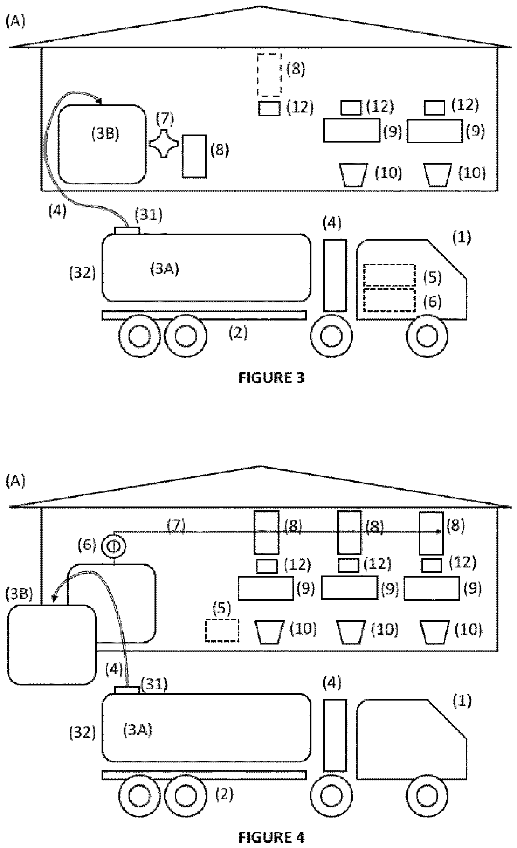

As shown in Figures 3 to 6, the transport vehicle (1) and distribution container (3) are adapted so that can be operated for discharging coffee beans at a plurality of consumption locations (A), thereby providing a determined quantity of coffee beans to each of these, and after discharging the load from the distribution containers (3), to later return the distribution containers (3) to a supply location (B) for refilling them.

At each consumption location (A) at least one beverage preparation system is operated that may include various coffee beans processing means, such as roasting means (11) and grinding means (12), in order to supply roasted and ground coffee beans. Furthermore, each consumption location (A) includes at least one beverage preparation apparatus, including at least one beverage preparation device (9) that can be operated with roasted and ground coffee beans, or substance derived therefrom. The beverage preparation devices (9) can form part of beverage preparation apparatuses that include means for providing a flow of water heated up to at least 80°C, preferentially at least 90°C, and at a flow pressure of at least 5 bar, preferentially at least 10 bar. The beverage preparation devices (9) can be configured so that can discharge into drinking recipients (10) according to the direction of gravity or in an opposite direction to it.

In the case of the embodiments shown in Figures 3 to 6, the distribution process can include discharging coffee beans from a first type of distribution container (3) in position on-board the transport vehicle (1), to a second type of distribution container (3) provided indoors or outdoors.

The system according to the present invention comprises a distribution container (3; 3A, 3B) with at least one continuous collection volume adapted so that can collect at least 0.005 m³, preferentially at least 0.5 m³.

The distribution containers (3) can be provided with a metallic envelope, or in a composite material, preferentially compostable, preferentially with at least part of the interior surface with "food grade" finish, and so that an inert atmosphere can be generated and maintained inside.

The distribution containers (3) can be configured with a general shell-like shape and a cylindrical, frusto-conical, or parallelepiped-like shape, for example a cube, with a base region of at least 0.5 m², preferentially with at least 1 m².

According to an aspect of the present invention, the system can include a first type of distribution container (3) adapted as a transport container (3; 3A) and having a larger collection volume than a second type of distribution container (3; 3B) adapted as a supply container (3; 3B).

A difference between transport container (3A) and supply container (3B) can be the size of the total collection volume and the size of the respective loading opening (31a), which can be larger in the case of the former than in the case of the second.

Furthermore, the supply container (3B) can be different from the transport container (3A) in at least one of: general configuration, construction material, support structure.

In particular, the transport container (3A) can present characteristic dimensions whereby one thereof can present an order of magnitude larger than at least one other, where at least two can be similar, where the smallest can be larger than 1 m, preferentially greater than 2 m.

The transport container (3A) can be configured so that confines a total collection volume of at least 5 m³, preferentially at least 10 m³, whereby it is preferred when said transport container (3A) has outer dimensions contained in a reference volume and similar to a shipping container of standard dimensions, including of 20 feet or 40 feet.

The distribution supply container (3B) may have characteristic dimensions smaller than those of the transport container (3A), at least two of which may be similar, the smallest of which may be greater than 0.4 m, of a is preferentially greater than 0.5, and the largest may be less than 1.8 m, preferentially less than 1.2 m.

The distribution supply container (3B) can present, when fully loaded with coffee beans, a weight of at least 10 kg, preferentially at least 25 kg, particularly preferentially at least 40 kg, and at most 250 kg, preferentially at most 130 kg, particularly preferentially at most 75 kg.

The discharge and loading openings (31a, 31b) of the distribution containers (3; 3A; 3B) can present a characteristic dimension (D) of between 30 and 1000 mm, preferentially between 50 and 300 mm.

The transport container (3A) can be adapted so that can be operated at least outdoors. The supply container (3B) can be configured and adapted so that can be operated at least indoors.

At least the supply container (3B) can present at least one of: a first dimension (X₁), for example height, and a second dimension (X₂), for example width, greater than 0.3 m, preferentially greater than 0.4 m, and less than 1.5 m, preferentially less than 0.8 m.

The discharge of coffee beans can be carried out via discharge means (4), in particular a discharge flow conduct, preferentially via a flexible pipe between an opening (31) of the distribution container (3) and an opening (31) of a supply container (3B). The discharge of coffee beans can be advantageously carried out in an environment-sealed manner.

The supply container (3B) can be provided as an in-door storage reservoir (Figure 3), or arranged outdoors and in connection with the interior (Figure 4), or so that can be carried indoors of the consumption location (A).

In the case of the embodiment shown in Figure 3, the coffee beans, for example roasted coffee beans, can then be manually discharged, from time to time and as required, from the supply container (3B) via respective discharge means (7). The discharge means (7) are configured so that can be releasably engaged with the opening (31) and thereby provide an optional discharge of coffee beans.

The discharge means (7) can in this case be configured in the form of a valve or discharge tap, manually operable, and the discharge can be made to supply means (8) which can then also be manually associated directly in a flow connection with grinding means (12) of coffee beans.

In this example, the consumption location (A) can include coffee beans grinding machines having said supply means (8) and grinding means (12), and that can supply portions of roast and ground coffee beans, as well as coffee brewing apparatus of the filter holder type. These apparatuses will be known to the person skilled in the art, so that further description is waived.

In the case of the example shown in Figure 4, the discharge of coffee beans from the supply container (3B) can be done through discharge means (7) configured as a flow conduit providing connection between an opening (31) and at least one, optionally a plurality of, supply means (8) operable in connection with, and so that can supply, grinding means (12) and beverage preparation device (9).

The discharge means (7) can be associated with power means (6) adapted to provide energy for displacement of the flow, such as compressed air, or to generate a suction force, or the like.

It is advantageous when this flow connection can be established sealed to the ambient atmosphere, so that the coffee beans are kept protected from exposure to it all along the way from the supply location (B) until being supplied to a beverage preparation device (9).

It is further advantageous when the discharge of coffee beans can be done without manual intervention, preferentially automatically regulated by data means (5) associated with the beverage preparation system.

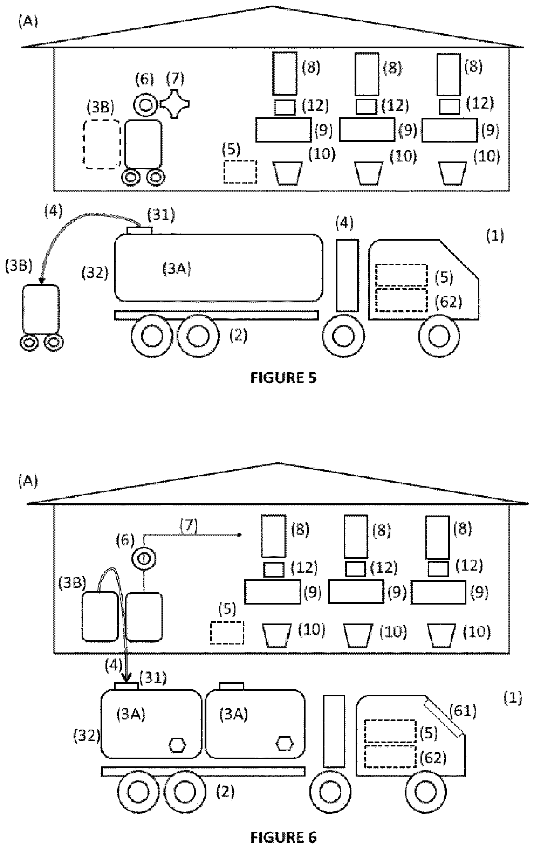

In the case of the example shown in Figure 5, the supply containers (3B) are associated with displacement means (30) so that can be moved between outdoors and indoors of the consumption location (A).

Furthermore, the supply containers (3B) can be associated with discharge means (7) of the valve or discharge tap type, but additionally associated with power means (6), so that the discharge can be controlled automatically, preferentially by functional connection with the data means (5) that regulate the operation of the beverage preparation system.

In the case of Figure 6, the possibility is shown that at least part of the supply containers (3B), or containers, can be used for collecting the coffee grounds resulting from the beverage preparation process based on ground coffee beans, and that said coffee grounds can be loaded into transport containers (3A) associated with the transport vehicle (1), so that can be transported to a destination, for example to the supply location (B) .

It is thus advantageously provided an efficient solution for the distribution of coffee beans and the collection of residues resulting from its use, with potential for recovery of said residues.

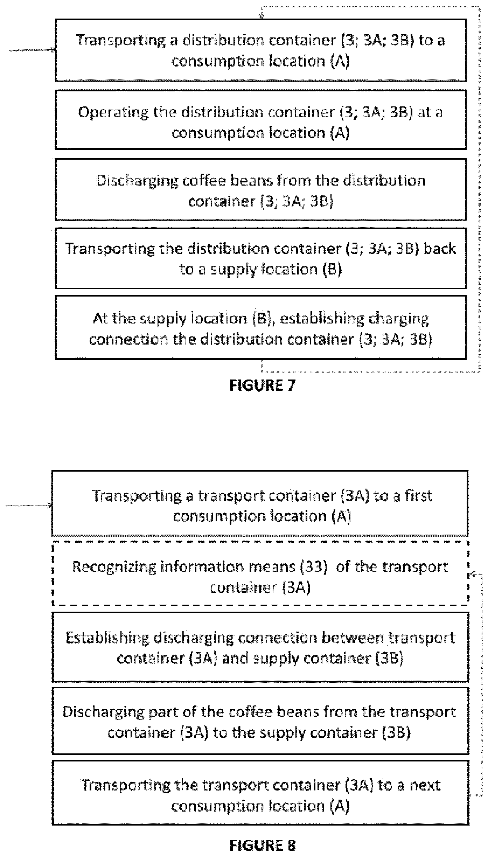

As shown in the flowchart of Figure 7, the process according to the present invention can thus include successive cycles of loading a load of coffee beans into a distribution container (3) at a supply location (B), distributing this load of coffee beans to at least one consumption location (A), where at least part of the load of coffee beans is discharged, and then returning that distribution container (3) to the supply location (B) for refilling and starting a new distribution cycle.

Each cycle can be started with loading, or reloading, a certain amount of coffee beans at a supply location (B) and may include discharging part of this quantity at each of a plurality of consumption locations (A), or at at least part of each of these consumption locations (A).

Each distribution cycle can include different consumption locations (A), both in terms of number and in terms of quantity of coffee beans discharged in each, and in terms of the geographic distribution of consumption locations (A).

Cycles may include use of at least two types of distribution containers (3A, 3B), including transporting transport containers (3A) to a single consumption location (A), or to a plurality of successive consumption locations (A), as well as establishing a discharging connection between the transport container (3A) that is not operable indoors and a supply container (3B) that is operable indoors, and the discharging of a part of the volume of coffee beans at the consumption location (A).

Alternatively, the transport container (3A) can be offloaded outdoors of the consumption location (A) and operated at the consumption location until all its cargo is used, being returned to the supply location (B) when empty.

The supply container (3B) can be adapted so that can be moved between outdoors and indoors of the consumption location (A).

Furthermore, as depicted in the flowchart of Figure 8, at each consumption location (A), the distribution process may include recognition of the information means (33) associated with the transport container (3A) by apprehension means in functional connection with the data means (5) of the transport vehicle (1), after which a discharging connection between a transport container (3A) and a supply container (3B) may be established to provide the discharge of coffee beans from the former to the latter.

This discharge connection can be realized by means of a discharge conduit, preferentially with the contribution of a flow displacement energy form, for example compressed air or underpressure, preferentially generated by the power means (6) associated to the transport vehicle.

Alternatively, the process may include only opening the discharge opening (31a), without establishing a physical conductive coffee beans connection, so as to provide coffee beans discharge, for example only by means of the force of gravity, to a supply container (3B), possibly in a manner that is not air sealed.

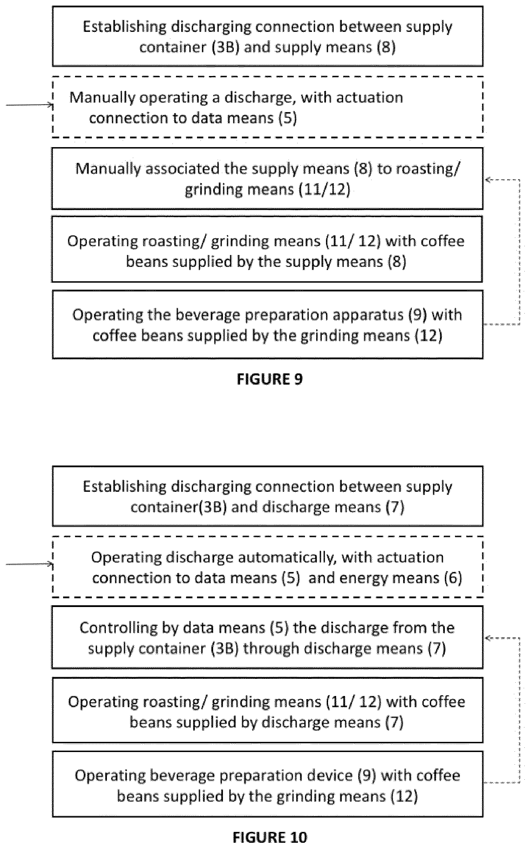

In addition, as shown in Figures 9 and 10, at each consumption location (A), the process may include providing from time to time a certain quantity of coffee beans from at least one of: transport container (3A) and supply container (3B) to at least one of: discharge means (7) and supply means (8) associated in flow connection to processing means of coffee beans upstream of extraction devices (9), said processing means of coffee beans providing at least one of roasting means (11) and grinding means (12) of the coffee beans.

The process may include apprehending information means (33) from the supply container (3B) prior to establishing the discharge connection.

The discharging can be carried out manually to the supply means (8), or automatically, preferentially controlled by the data means (5), to the discharge means (7).

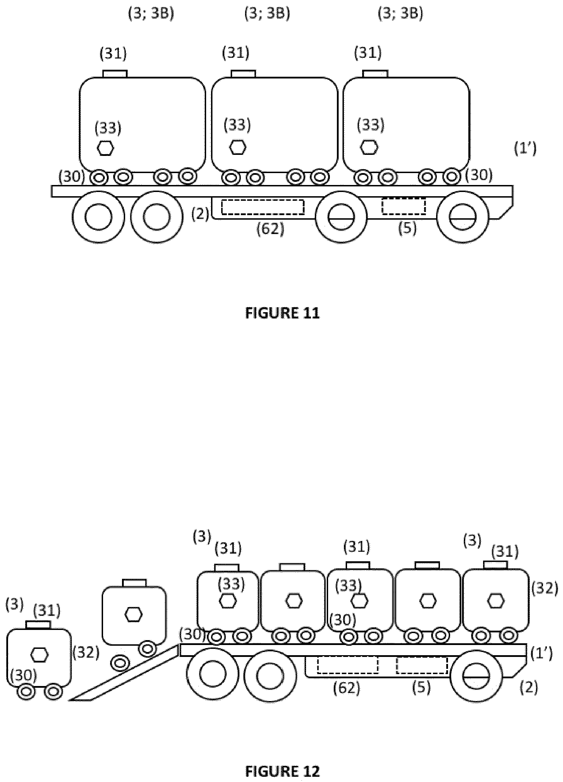

Figures 11 and 12 represent another embodiment of the system according to the present invention. In particular, in this case, the distribution containers (3; 3B) are provided so that can be offloaded at a consumption location (A) and operated there by means of direct or indirect connection to a beverage preparation system.

The transport vehicle (1') can carry a plurality of distribution containers (3A, 3B) adapted so that can be moved on-board and off-board. The discharge means (4) can be adapted so that can move the distribution containers (3) on-board of the transport vehicle (1').

According to a particularly preferred embodiment, the distribution containers (3), in particular of at least one type of supply container (3B), can have displacement means (30) so that can be moved off-board and on-board the transport vehicle (1'), as well as to the interior of the consumption location (A).

In these cases, the transport vehicle (1') is configured so that can collect distribution containers (3) over more than 90% of the length, preferentially over the entire length of the transport vehicle (1'), and this does not include space for the driver, possibly also not for the crew. The transport vehicle (1') can also be adapted so that can be driven automatically, without human intervention, on the paths between at least one supply location (B) and each of the consumption locations (A).

According to one aspect of the present invention, the coffee beans distribution process, in particular the steps of transporting the distribution container (3), discharging the coffee beans at each consumption location (A), optionally by offloading the distribution containers (3; 3B), advantageously configured as supply containers (3B), can thus be carried out automatically, without direct human intervention, and under the supervision of remote data means (20).

According to one aspect of the present invention, the system can include only one type of distribution container (3), in particular of a transport container (3A), configured so that can be transported to a consumption location (A), and be offloaded and operated at the consumption location (A) as storage and supply of coffee beans, including at least one of: roasting means (11) and grinding means (12).

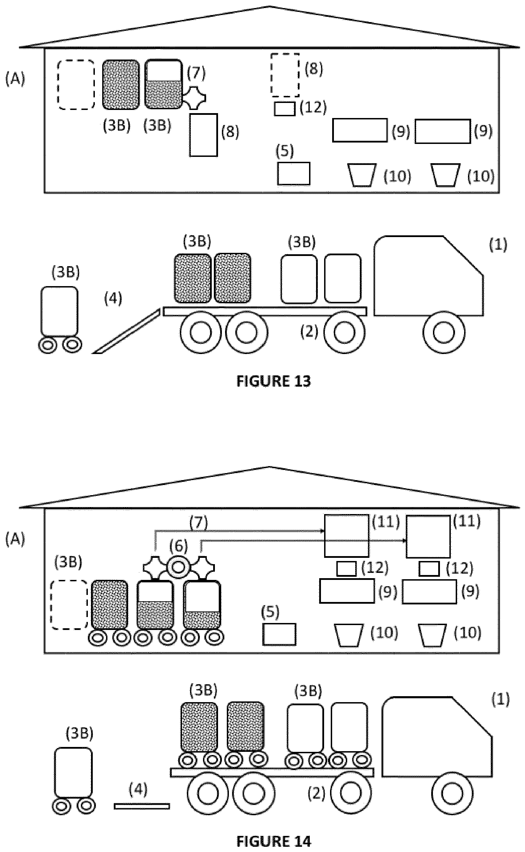

Figures 13 and 14 represent embodiments according to the present invention in which the system includes only one type of supply containers (3B) and the coffee distribution process includes offloading a certain number of supply containers (3B) at each consumption location (A). The transport vehicle (1) can then also be loaded with supply containers (3B) which, however, are empty, so that can be returned to a supply location (B) for refilling. Optionally, the supply container (3B) is adapted so that can supply coffee beans to supply means (8) that present a collection volume of coffee beans that is smaller than the supply container (3B) and that can be associated in direct power supply connection, for example actuated by at least one of: discharge means (4) and gravity force action, with at least one of said roasting and grinding means (11, 12).

Alternatively, the discharge means (4) can be associated with the consumption location (A).

According to one aspect of the present invention, both this and all other transfer operations of coffee from a first to a second container can be carried out by means of a connection sealed to the outside atmosphere, so that the coffee is never directly exposed to the latter.

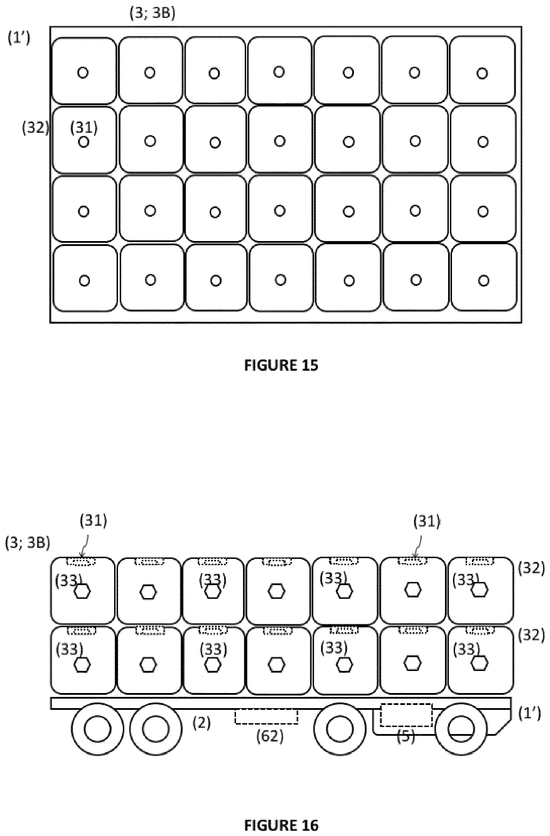

Figures 15 and 16 represent preferred configurations of the envelope (32) of distribution containers (3), in particular of supply containers (3B), that provide a maximal use of the available transport volume in a respective transport vehicle (1).

As shown, the supply containers (3B) can be configured so that can be stacked, at least two, one on top of the other, and arranged next to each other, so as to minimize gaps between them.

In particular, the supply containers (3B) can be configured so that can be arranged in a three-dimensional matrix, with their own structural support, so as to occupy at least 80%, preferentially at least 90% of the cargo space of a transport vehicle (1).

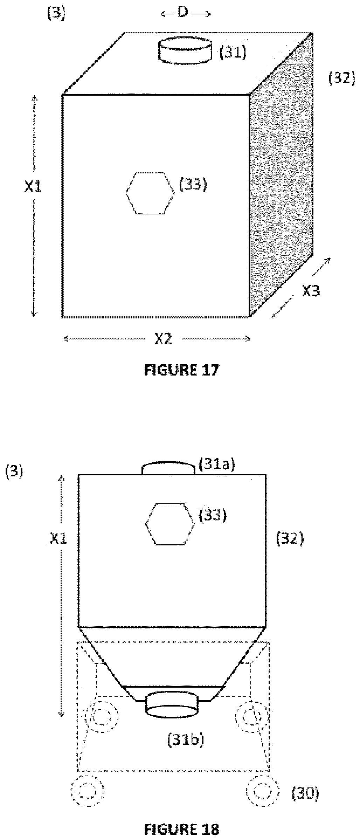

Figures 17 and 18 represent two embodiments of distribution containers (3; 3A, 3B) adapted so that can be used multiple times, in multiple distribution cycles of coffee beans between supply location (B) and consumption locations (A).

At least the supply container (3B) can present similar second and third dimensions (X₂, X₃), transverse to the direction of the gravity force.

The supply container (3B) can present, when fully loaded with coffee beans, a weight of at least 10 kg, preferentially at least 25 kg, particularly preferentially at least 40 kg, and at most 250 kg, preferentially at most 130 kg, particularly preferentially at most 75 kg.

As mentioned above, the distribution container (3; 3A, 3B) can advantageously present a loading opening (31a) and a discharge opening (31b) that are different and/or provided at different locations, with a semi-rigid perimeter region or rigid, preferentially adapted so that can be engaged by a valve-type apparatus or a discharge tap and/or by a conduit-type connection for discharge flow, preferentially in a sealed manner to the ambient atmosphere.

The supply container (3B) can also present a loading opening (31a) adapted so that can provide sealing and resealing thereof in an air sealed manner, for example by means of a closure caplike element, and that can provide establishment of discharge connection with a transport container (3A). The loading opening (31a) of the supply container (3B) is advantageously similar to the discharge opening (31b) of the transport container (3A), in particular it presents a similar characteristic dimension (D), for example diameter.

The loading and discharge openings (31a, 31b) can present a characteristic dimension (D) comprised between 30 and 1000 mm, preferentially between 500 and 300 mm.

In particular, it is preferred when at least one of: the transport container (3A) and the supply container (3B) present an envelope with a wall thickness thereof which is at least 0.5 mm, preferentially at least minus 1 mm, and at most 5 mm, preferentially at most 3 mm.

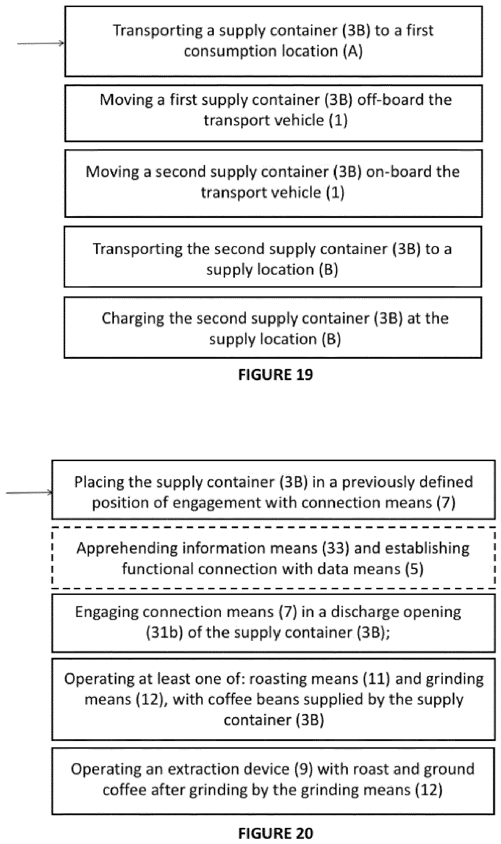

In the case of an alternative process shown in Figures 19 and 20, the system only includes one type of supply containers (3B), which can be initially loaded with coffee beans at a supply location (B) and transported to a certain consumption location (A) in which they are offloaded from a transport vehicle (1).

The distribution process may include moving part of the distributing containers (3) on-board, by discharge means (4) associated with the transport vehicle (1), by displacement means (30) associated with the supply containers (3B), and according to the needs of each consumption location (A). A given number (n) of supply containers (3B) can be supplied at each consumption location (A) .

During each cycle of use at the consumption location (A), part (m) of the supply containers (3B) can be operated in grain discharge, and the other part (n-m) can be stored.

In this case, it is also advantageous to collect in the transport vehicle (1) at least one distribution container (3) that was already at the location in question and which, in the meantime, is already empty.

After moving the distribution containers (3) out of the transport vehicle (1), they can be parked outdoors and/or indoors of the consumption location.

As should be readily understood by the reader, the process can also include transport containers (3A) of larger dimensions and that can be operated as supply containers (3B).

The process includes placing a supply container (3B) in a predefined operative position indoors of the consumption location(A) .

In particular, it is in that operative position, preferentially only in that operative position, that a discharge opening (31) can be engaged with discharge means (7), for example in the form of a valve or discharge tap, or in the form of a flow discharge conduct.

It is further preferred when at least one of: placing in operative position, engaging with discharge means (7), and establishing functional connection with data means (5), can be preceded and conditioned on the apprehension of the information means (33) by second apprehension means (52) automatically or semiautomatically.

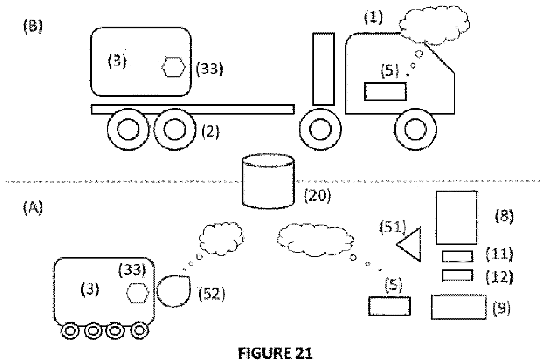

According to the present invention, and as schematically represented in Figure 21, the transport vehicle (1) and the supply location (B) can present data means (5) adapted so that can operate in a functional connection of data exchange with remote data means (20), associated for example with a supply location (B), including data relating to the location of certain distribution containers (3) .

The beverage preparation system can further include first grasping means (51) provided so that can apprehend operating parameters associated with at least one of the devices, including at least one of: roasting means (11), grinding means (12) and beverage preparation device (9), or associated fluid delivery devices.

As mentioned above, the distribution containers (3) may present information means (33) associated with the envelope (32) and in the form of alphanumeric or coded information relating to the contents of the container, type of container and/or unique identification of the container, for example serial number, or similar, origin and/or destination, or counterfeiting prevention measures.

According to another embodiment, the information means (33) are provided so that can be read by second apprehension means (52) functionally connected to data means (5) that regulate the operation of the beverage preparation system, whereby the discharge of coffee beans from the distribution container (3) can be regulated by said data means (5) according with the data apprehended by the second apprehension means (52).

It is particularly advantageous when the operating parameters include at least one parameter relating to the operated amount of coffee beans and to the start of a coffee extraction cycle in a beverage preparation device (9).

According to a particularly preferred aspect of the present invention, the distribution containers (3) can be referenced individually, preferentially through information means (33) associated with each one thereof.

The distribution process can thus include the georeferencing of each distribution container (3), uniquely identified throughout the entire distribution process, in particular including along the shipment thereof to a consumption location (A) where the coffee beans are discharged, and along the return to a supply location (B) for refilling. In addition, it can also include the record of the period of time it remains at a certain consumption location (A) .

At any given time, it can be determined which distribution containers (3) are where, including en route to which, in which and returning from which consumption location (A), or which supply location (B). An operation history of each distributing container (3) can be generated.

The distribution process can also optionally include the automatic association of a certain georeference, or set of georeferences, to a certain consumption location (A), as well as the automatic association of a certain distribution container (3) to a consumption location (A) for operation only on this one.

The process may also include the automatic generation of estimates of future occurrences, namely based on data provided to the remote data means (20) by the data means (5), including estimated time of arrival of distribution containers (3A) to each supply location (B), as well as future demand estimates, including time estimation of at least a first, preferentially also a second shipment of distribution containers (3A) to a given consumption location (A), and the automatic generation of optimal circulation paths for transport vehicles (1).

The transport vehicle (1) can be configured so that can carry up to 200 distribution containers (3) each time, preferentially up to 100 distribution containers (3), whereby the transport vehicle (1) can be configured so that can carry between 1 and 50 distribution containers (3), whereby the transport vehicle (1) preferentially presents means for movement of the distribution container (3) off the transport vehicle (1).

The transport vehicle (1) can be configured so that can carry from 1 to 10 rows, preferentially up to 6 rows of distribution containers (3), whereby it is preferred when said rows extend along at least most part, preferentially along at least approximately the entire length of the transport vehicle (1), and it is further preferred when at least two, preferentially at least 3, and at most 8 distribution containers (3) can piled along each row.

The distribution container (3) can be adapted so that can be functionally connected with, and operated in discharge through data means (5) associated with at least one of: transport vehicle (1) and consumption location (A), so that the discharge from the distribution container (3) can be regulated according to the amount of storage associated with the consumption location (A).

The distribution container can be adapted so that can be operated in discharge through functional connection to data means (5) associated with the at least one beverage preparation apparatus at the consumption location (A), so that the discharge from the distribution container (3) can be regulated according to at least one operating parameter of the at least one beverage preparation apparatus, such as for example the amount of roasted and ground coffee beans, or substance derived therefrom, available upstream of a beverage preparation device (9).

The distribution container (3) can present at least one of:
- a first characteristic dimension (X₁), for example the height, that is bigger than 0.3 m, preferentially bigger than 0.5 m and further preferentially smaller than 2.0 m, particularly preferentially smaller than 1.8 m;
- at least a second characteristic dimension (X₂), for example the width or the depth, at least approximately corresponding to a width of the transport vehicle (1), or to an integer divisor of up to 10, of a characteristic dimension of a load portion thereof;
- at least a second characteristic dimension (X₂), for example the width, at least approximately corresponding to a divisor of up to 5 of a first characteristic dimension, for example the width, of a load portion of the transport vehicle (1).

The distribution container (3) can present or be associated with locomotion means (30) so that can circulate for example off-board and on-board of the transport vehicle (1), as well as indoors and outdoors of the consumption location (A), whereby said locomotion means (30) can be manually and/or mechanically driven.

The distribution container (3) can present information means (33) adapted so that can provide information relative to the distribution container (3) and that can be automatically apprehended.

The distribution container (3) can present data means (34) adapted so that can provide at least one of: data processing, control of parameters and wireless data transmission, including to support at least one of: displacement autonomy, content monitoring and discharge regulation of the distribution container (3) .

The consumption location (A) can include data means (5) functionally associated with beverage preparation apparatus, preferentially including to first and second data apprehension means (51, 52) that can be functionally associated with components of the beverage preparation apparatus and with the distribution container (3), respectively, whereby said data means (5) at the consumption location (A) can be advantageously functionally associated with data means (5) in the transport vehicle (1) an to remote data means (20).

## Claims

1. Process for distributing coffee to geographically distanced consumption locations (A), comprising the following steps:
- providing a transport vehicle (1) with displacement means (2) ;
- providing a distribution container (3; 3A, 3B) adapted so that can store coffee and can be reused,
whereby the process is **characterized**
**in that** comprises successive delivery cycles of a load of coffee beans or substance derived therefrom, each cycle including the following successive steps:
- loading the distribution container (3) with a load at a supply location (B);
- transporting the distribution container (3) on the transport vehicle (1) to a first consumption location (A);
- operating the distribution container (3) in discharge at the consumption location (A) remotely relative to a beverage preparation apparatus;
- transporting the distribution container (3) to a supply location (B).

2. Process according to claim 1, **characterized in that** the distribution container (3) is provided as at least one of:
- a transport container (3A) adapted for loading at the supply location (B), optionally on board the transport vehicle (1), and
- a supply container (3B) adapted so that can be operated on discharge indoors at the consumption location (A), and
**in that** each cycle includes:
- loading the transport container (3A) at the supply location (B) ;
- providing discharge connection from the transport container (3A) outside of doors to a supply container (3B) outdoors or indoors of the consumption location (A),
- operating the transport container (3A) in discharge to the supply container (3B), and
- providing discharge connection from the supply container (3B) indoors of the consumption location (A);
- operating the supply container (3B) in remote discharge with respect to a beverage preparation apparatus.

3. Process according to claim 1, **characterized in that** there is provided a reusable supply container (3B), each cycle including:
- loading the supply container (3B) at a supply location (B), optionally on board of a transport vehicle (1) or associated with displacement means (30);
- arranging the supply container (3B) in a discharge position indoors of the consumption location (A) and remotely relative to the beverage preparation apparatus;
- providing discharge connection from the supply container (3B) indoors of the consumption location (A);
- operating the supply container (3B) in discharge remotely with respect to a beverage preparation apparatus.

4. Process according to claims 1 to 3, **characterized in that** the discharge operation of the supply container (3B) at the consumption location (A) includes supplying at least one of:
supply means (8), roasting means (11), grinding means (12) and beverage preparation device (9) associated with a beverage preparation apparatus at the consumption location (A), in particular by means of regulated discharging of partial quantities of the quantity in the distribution container (3) to at least one of: supply means (8), roasting means (11) and grinding means (12) at the consumption location (A), preferentially in measured quantities corresponding to portions to be supplied to beverage preparation devices (9), for example from 4 to 12 g, preferentially from 5 to 10 g, of roast and ground coffee beans.

5. Process according to claims 1 to 4, **characterized in that** the process further includes:
- assigning a unique identification to each distribution container (3), preferentially associated with information means (33) configured so that can be automatically apprehended;
- providing operative connection of at least one of: discharge means (7) and power means (6), to data means (5) associated with beverage preparation apparatus;
- apprehending information means (33) associated with and identifying the distribution container (3) uniquely, in particular through second data means (52) associated with the data means (5);
- communicating the unique identification of the distribution container (3) to remote data means (20).

6. Process according to any of claims 1 to 5, **characterized in that** the steps of loading, transporting, and discharging the load from the distribution container (3; 3A; 3B) are performed under conditions of at least one of:
- sealed from the outside atmosphere,
- supervision by remote data means (20), including by data connection of data means (5), associated with at least one of: transport vehicle (1) and beverage preparation apparatus at the consumption location (A), with remote data means (20), and
**in that** the step of discharging at the consumption location (A) is carried out by actuation of power means (6) associated with discharge means (7) that can be associated with an opening (31) of the distribution container (3), whereby said actuation is preferentially regulated by data means (5) associated with a beverage preparation apparatus.

7. Process according to any of claims 1 to 6, **characterized in that** the process also includes the following steps, in particular sequentially, in at least part of the consumption locations (A):
- providing actuated or automatic opening of the opening (31) of the distribution container (3);
- operating distribution containers (3) by means of a direct connection, for example outflow conduit, between transport container (3A), for example on board of a transport vehicle (1), and supply container (3B), out of the transport vehicle (1) ;
- operating the supply container (3B) in discharge indoors of the consumption location (A) and remotely with respect to a beverage apparatus;
- optionally, moving the supply container (3B);
- operating the supply container (3B) for refilling it at the consumption location (A), optionally outdoors;
whereby the process preferentially does not include loading the transport container (3A) onto the transport vehicle (1).

8. Process according to any of claims 1 to 7, **characterized in that** the process includes at least one of the following steps, in at least part of the consumption locations (A):
- moving a supply container (3B) out of the transport vehicle (1) ;
- optionally, associating displacement means (30) with the supply container (3B);
- moving the supply container (3B) indoors of the consumption location (A), in particular to a discharging position where connection with discharge means (7) can be established;
- operating the supply container (3B) in discharge through discharge means (7), including in operative connection to power means (6) associated with discharge means (7), or only by gravitational discharge;
- optionally, after the distribution container (3) is empty, loading the distribution container (3) with coffee grounds resulting from the extraction of roasted and ground coffee beans;
- moving the supply container (3B) on board of a transport vehicle (1);
- transporting at least the supply container (3B) back to the supply location (B).

9. Process according to any of claims 1 to 8, **characterized in that** operating a distribution container (3; 3A, 3B) in discharge includes at least one of the following steps:
- engaging discharge means (7) with an opening (31) of the supply container (3B) in a remote discharge position relative to a beverage preparation apparatus;
- actuating power means (6) associated with the discharge means (7);
- establishing functional connection between discharge means (7) and data means (5) associated with beverage preparation apparatus;
- actuating the discharge means (7) and/or the power means (6) manually or automatically according to inputs from the data means (5);
- regulating discharge by the data means (5) according to the data apprehended, in particular by the first apprehension means (51), relating to the operation of at least one of: roasting means (11), grinding means (12) and beverage preparation device (9);
- discharging according to at least one of: continuously, in predetermined portions, in portions determined by the data means (5);
- apprehending data relating to the quantity discharged from the supply container (3B), and processing this data by the data means (5) so as to anticipate the empty condition of the supply container (3B).

10. Process according to any of claims 1 to 9, **characterized in that** the process also includes the following steps, at consumption locations (A):
- establishing a functional connection between data means (5) associated with beverage preparation apparatus, and remote data means (20);
- apprehending information means (33) uniquely associated with a distribution container (3; 3A, 3B) before starting the discharging operation thereof;
- exchanging data associated with at least one of: roasting means (11), grinding means (12), beverage preparation devices (9) apprehended by first apprehension means (51) via the data means (5) with remote data means (20).

11. Process according to any of claims 1 to 10, **characterized in that** operating the distribution container (3; 3A, 3B) in discharge, requires at least one of:
- verification of information means (33) including unique identification of the distribution container (3),
- receiving an instruction transmitted from remote data means (20),
in particular, in data connection with data means (5), and preferentially also in data connection with remote data means (20) .

12. System for distributing coffee to consumption locations (A) and comprising:
- a transport vehicle (1) with displacement means (2):
- a distribution container (3; 3A, 3B) adapted for storing coffee beans or substance derived therefrom, and which can be refilled;
- a beverage preparation apparatus provided at the consumption location(A) and operable with the coffee beans discharged from the distribution container (3),
**characterized in that** the distribution container (3) is adapted so that can be recharged multiple times ex situ and transported multiple times to consumption locations (A), and so that is operable in discharge in situ remotely from beverage preparation apparatus.

13. System according to claim 12, **characterized in that** the distribution container (3) is adapted so that can be at least one of: refilled and resealed with an interior atmosphere sealed to the ambient atmosphere, preferentially with maintenance of an interior atmosphere of inert gas, and which may be by at least one of: open and discharged, preferentially air sealed to the ambient atmosphere, in the vicinity outdoors or indoors of the consumption location (A), and
**in that** the distribution container (3) is adapted so that can be operated in operative connection of supply of the beverage preparation apparatus, including indirectly, for example through food product transfer containers, and directly, through of flow connection means, remotely from the beverage preparation apparatus, at least one of: the transport vehicle (1), and consumption location(A) preferentially presenting discharge means (4 7) adapted so that can provide a conduit-type discharge connection for the flowable food product, such as coffee beans or substance derived therefrom, from the distribution container (3).

14. System according to claim 12 or 13, **characterized in that** the distribution container (3) has a discharge opening (31) adapted so that can be releasably engaged with at least one of:
- discharge means (4) associated and/or associable with the transport vehicle (1) and adapted so that can actuate the discharging from the distribution container (3) in a position on board of the transport vehicle (1);
- local discharge means (7) adapted so that the discharging from the distribution container (3) can actuate in a position close to the outdoors or indoors of the consumption location (A),
whereby said discharge means (4, 7) can be actuated with the contribution of at least one of: electrical power means (6) and gravity force.

15. System according to any of claims 12 to 14, **characterized in that** the distribution container (3) presents an envelope (32) configured so as to provide an arrangement of two distribution containers (3) with at least 50%, preferentially at least 80%, of their directly adjacent faces, wherein the envelope (32) is further configured so that the base region corresponds to at least 50%, preferentially at least 80%, of the vertical projection of the outer perimeter of the envelope (32) on the floor, whereby the envelope (32) is further configured so as to provide for stacking of at least two distribution containers (3), preferentially at full load, one on top of the other.
